## Europäisches Patentamt
## European Patent Office
## Office européen des brevets

(19)

(11) Veröffentlichungsnummer: **0 123 777**
**B1**

(12) **EUROPÄISCHE PATENTSCHRIFT**

(45) Veröffentlichungstag der Patentschrift:
08.04.87

(21) Anmeldenummer: **84100269.4**

(22) Anmeldetag: **12.01.84**

(51) Int. Cl.⁴: **G 01 G 23/00,** G 01 G 23/01

(54) Justierverfahren für eine Wägevorrichtung und dazu geeignete Vorrichtung.

(30) Priorität: **24.03.83 DE 3310735**

(43) Veröffentlichungstag der Anmeldung:
**07.11.84 Patentblatt 84/45**

(45) Bekanntmachung des Hinweises auf die Patenterteilung:
**08.04.87 Patentblatt 87/15**

(84) Benannte Vertragsstaaten:
**AT DE FR NL**

(56) Entgegenhaltungen:
**GB-A-2 027 542**

(73) Patentinhaber: **CARL SCHENCK AG,
Landwehrstrasse 55 Postfach 40 18, D-6100
Darmstadt (DE)**

(72) Erfinder: **Gassmann, Helmut, Dipl.- Ing. Dr.,
Donnersbergstrasse 3, D-6101 Seeheim-
Jugenheim (DE)**
Erfinder: **Giesecke, Peter, Dipl.- Phys. Dr.,
Talstrasse 2a, D-6101 Seeheim- Stettbach (DE)**

(74) Vertreter: **Brand, Fritz, Dipl.- Ing., Carl Schenck
AG Patentabteilung Landwehrstrasse 55
Postfach 4018, D-6100 Darmstadt (DE)**

LIBER, STOCKHOLM 1987

EP 0 123 777 B1

## Beschreibung

Die Erfindung betrifft ein Verfahren nach dem Oberbegriff des Anspruchs 1 und dazu geeignete Vorrichtungen - Ansprüche 4 und 8.

In zahlreichen Fällen treten bei Verwiegungen Kraftnebenschlüsse auf, die beispielsweise durch Verformungen des Wägebehälters oder der Zuführungs- bzw. Abführungsorgane bedingt sind. Der ideale Fall, daß derartige Kraftnebenschlüsse zeitlich unveränderlich sind und somit ohne Schwierigkeiten eingeeicht werden können, tritt in der Praxis nur selten auf. Vielmehr ist es häufig, beispielsweise bei der Autoklavenverwägung oder bei Beschickung von Hochöfen, so, daß zeitlich stark veränderliche Kraftnebenschlüsse auftreten, die eine unzulässige Vergrößerung des Gesamtfehlers der Wägung bedingen. Als Abhilfe wird normalerweise versucht, die Kraftnebenschlüsse, beispielsweise durch den Einbau von Kompensatoren, möglichst klein zu halten.

Demgegenüber liegt der Erfindung die Aufgabe zugrunde, die zeitliche Veränderung der Kraftnebenschlüsse durch ein Justierverfahren zu erfassen und zu berücksichtigen bzw. auszugleichen.

Diese Aufgabe wird erfindungsgemäß dadurch gelöst, daß den jeweiligen Kraftnebenschlüssen mindestens eine Meßeinrichtung für einen, die Größe des Kraftnebenschlusses bestimmenden Parameter zugeordnet ist, daß dieser Parameter bei konstant gehaltener Belastung der Wägevorrichtung variiert wird und daß aus den in Abhängigkeit von der Größe des Parameters erfolgenden scheinbaren Belastungsänderungen der Wägevorrichtung eine Korrekturgröße für das Ausgangssignal der Wägezelle(n) gewonnen wird. Wesentlicher Vorteil dieser Lehre ist es, daß keine mechanischen Maßnahmen zur Minimalisierung der Kraftnebenschlüsse benötigt werden, wodurch bei geringeren Kosten eine höhere Meßgenauigkeit möglich ist.

Besonders bei weichen Lagerungen des Auswiegebehälters ist es vorteilhaft, wenn für mehrere konstante Belastungen eine last- bzw. gewichtsabhängige Korrekturgröße gewonnen wird, da damit die Meßgenauigkeit weiterhin gesteigert wird.

Besonders geeignet zur Durchführung des Verfahrens ist eine Vorrichtung mit einer Kraftnebenschlüsse aufweisenden Wägevorrichtung, die über mindestens eine Wägezelle abgestützt ist, deren Signalausgang mit einer Auswertevorrichtung verbunden ist. Aufnehmer sind den Kraftnebenschlüssen zugeordnet, die die Kraftnebenschlüsse bestimmende Parameter messen, und die Ausgänge der Aufnehmer sind über Abschwächer und Additionspunkte mit den Signalausgängen der Wägezelle verbunden.

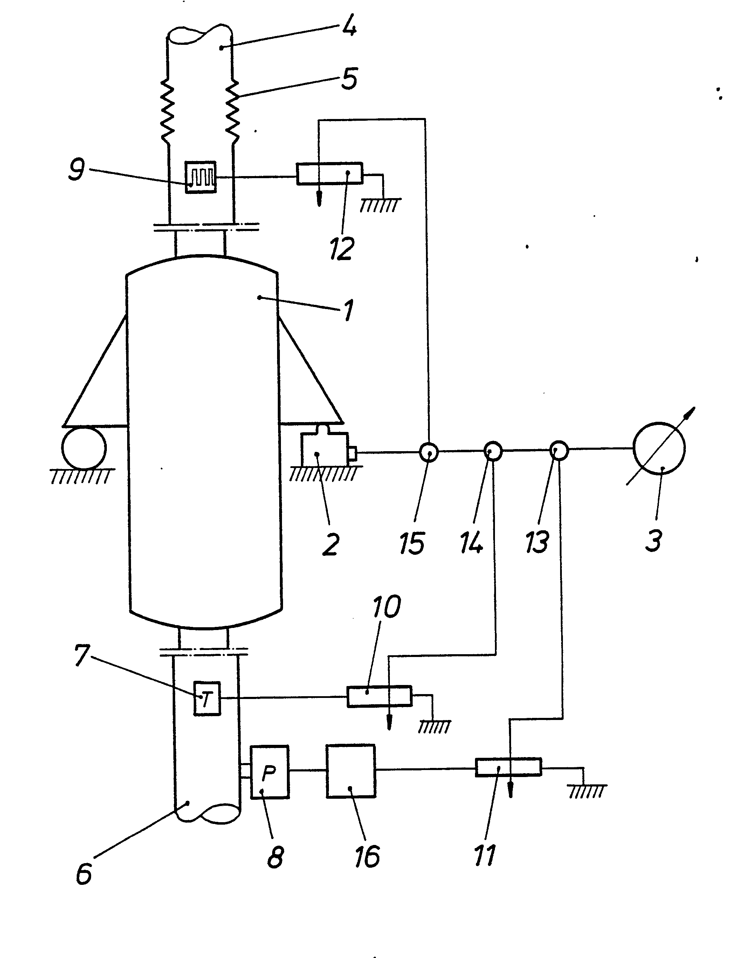

Die Figur zeigt schematisch ein Ausführungsbeispiel der Erfindung. Ein Wägebehälter 1 ist in im einzelnen nicht dargestellter Weise so gelagert, daß er sich über eine Wägezelle 2 abstützt. Der Ausgang der Wägezelle 2 ist mit einer Auswertevorrichtung 3 verbunden, die das Gewicht des Wägebehälters 1 anzeigt. Statt wie dargestellt über lediglich eine Wägezelle 2, kann sich der Wägebehälter 1 auch beispielsweise über 3 Wägezellen abstützen, deren Ausgangssignale addiert dann das Gesamtgewicht des Wägebehälters 1 ergeben. Soweit wie bisher geschildert läßt sich das Gewicht des Wägebehälters nach einer Eichmessung genau bestimmen, da keine zeitabhängigen Kraftnebenschlüsse auftreten.

Beispielsgemäß sei der Wägebehälter 1 ein Autoklav, in den ein Zuleitungsrohr 4 führt, das über einen Kompensator 5 mit dem Anschlußflansch des Wägebehälters 1 verbunden ist. Die Reaktionsprodukte aus dem Wägebehälter 1 werden über ein an ihm angeflanschtes Ableitungsrohr 6 abgeführt. Zuleitungsrohr 4 und Kompensator 5 bzw. Ableitungsrohr 6 stellen nun Kraftnebenschlüsse dar, deren Größe sich infolge verschiedener, ihre Größe wechselnder Parameter ändern kann. Beispielsweise werde das Ableitungsrohr voneinander unabhängigen unterschiedlichen Temperaturen und Drücken ausgesetzt. Die unterschiedlichen Temperaturen bewirken eine unterschiedliche thermische Ausdehnung des Ableitungsrohres und damit wechselnde Kraftnebenschlüsse. Ebenso können Veränderungen der Drücke über Verformungen bzw. Änderungen der Federrate zu unterschiedlichen Kraftnebenschlüssen führen.

Die einzelnen Parameter brauchen jedoch nicht immer unabhängig voneinander zu sein oder überhaupt in ihren Einzelwirkungen bekannt zu sein. Beispielsweise mögen auf das Zuleitungsrohr 4 ebenfalls unterschiedliche Drücke und Temperaturen einwirken, die jedoch beispielsweise über eine Dampfdruckkurve miteinander korreliert sind. Desweiteren stütze sich über das Zuleitungsrohr 4 ein in der Figur nicht dargestellter weiterer Reaktionsbehälter ab, wodurch dessen unterschiedliche Füllungsrate ebenfalls unterschiedliche Kraftnebenschlüsse bewirke, die im einzelnen nicht bekannt zu sein brauchen. Ein weiteres Beispiel für derartige unterschiedliche, technisch im einzelnen teilweise gar nicht erfaßbarer Kraftnebenschlüsse stellt die Beschickungsvorrichtung eines Hochofens dar, die den erheblichen Strömungsdrücken der Gichtgase ausgesetzt ist, wobei diese Strömungsdrücke noch dazu relativ kurzfristigen Schwankungen unterliegen.

Im Ausführungsbeispiel werden jetzt am Ableitungsrohr 6 ein Thermometer 7 und ein Manometer 8 angebracht. Auf die technische Ausführung dieser Instrumente kommt es im einzelnen nicht an, Widerstandsthermometer, Thermoelemente oder Pyrometer könnten, je nach auftretenden Temperaturen, beispielsweise geeignet sein. Das Ausgangssignal des Thermometers 7 und des Manometers 8 seien elektrische Ströme oder Spannungen. Auf das Zuleitungsrohr 4 wird ein Dehnungsmeßstreifen 9 appliziert, der die Dehnung des Zuleitungsrohres 4 ebenfalls in ein elektrisches Ausgangssignal umwandelt. Damit erfaßt der Dehnungmeßstreifen 9 sämtliche oben genannten, die Kraftnebenschlüsse beeinflussenden Faktoren ohne sich im einzelnen um die Entstehung der auftretenden Spannungen zu kümmern. Eine weitere in der Figur nicht dargestellte Möglichkeit wäre es, parallel zum Kompensator 5 einen beispielsweisen induktiven Wegaufnehmer zu schalten und über Längenveränderungen des Kompensators 5 die den unterschiedlichen Kraftnebenschluß bewirkenden unterschiedlichen Zustände zu bestimmen.

Die elektrischen Ausgänge des Dehnungsmeßstreifens 9, des Manometers 8 und des Thermometers 7 sind über Abschwächer mit Additionspunkten 15, 14, 13 verbunden. Die Abschwächer sind im Ausführungsbeispiel Potentiometer 12, 11, 10. Selbstverständlich kann auch jeder andere Abschwächer verwendet werden, beispielsweise ein Operationsverstärker. Zwischen den Ausgang des Manometers 8 und das Potentiometer 11 ist ein Funktionsgeber 16 geschaltet. Dieser Funktionsgeber 16 ist dann sinnvoll, wenn entweder bei linearem Einfluß des Parameters auf den Kraftnebenschluß das Ausgangssignal des Manometers 8 nicht linear ist. Ebenso ist der Funktionsgeber 16 dann sinnvoll, wenn das Ausgangssignal des Manometers 8 zwar linear ist, der Zusammenhang zwischen der Größe des Parameters Druck und dem Kraftnebenschluß jedoch einen beliebigen, nicht linearen Zusammenhang aufweist. Dieser Zusammenhang kann entweder über eine Funktion höherer Ordnung ermittelt werden, beispielsweise nach der Methode der kleinsten Quadrate, oder als rein empirischer Zusammenhang.

Die Funktionsweise der Vorrichtung wird im folgenden beschrieben. Zunächst wird die genannte Vorrichtung justiert. Dazu wird bei konstant gehaltenem Gewicht des Wägebehälters 1 zunächst für jeden Kraftnebenschluß die volle Parameteränderung durchlaufen, wobei die anderen Parameter konstant gehalten werden. Beispielsweise wird beim Ableitungsrohr 6 die Temperatur innerhalb der maximal möglichen Grenzen variiert. Das kann entweder durch Erhitzung des im Ableitungsrohr 6 befindlichen Austragsgutes geschehen oder auch lediglich durch um das Ableitungsrohr gewickelte Heizbänder. Stellt sich heraus, daß der genannte Parameter erhebliche Änderungen des Kraftnebenschlusses bewirkt, sollten auch zwischen Maximum und Minimum liegende Werte gemessen werden, um festzustellen, ob die Beziehung zwischen Parameter und Kraftnebenschluß linear ist oder ob ein Funktionsgeber 16 zwischen den Ausgang der Meßeinrichtung und den Abschwächer (Potentiometer 10, 11, 12) geschaltet werden muß.

Auf Grund des für jede Meßeinrichtung ermittelten "Durchgriffes", das ist der Quotient Ausgangssignal des dem Kraftnebenschluß zugeordneten Meßaufnehmers dividiert durch die Änderung des Wägezellenausgangssignals, kann dann der Abschwächer 10, 11, 12 so eingestellt werden, daß die Addition des abgeschwächten Signals der Meßeinrichtung mit dem Ausgangssignal der Wägezelle 2 die Veränderung des Kraftnebenschlusses kompensiert. Selbstverständlich kann sich dabei erweisen, daß zwischen Additionspunkte und Meßeinrichtung noch ein in der Zeichnung nicht dargestellter Invertierer geschaltet werden muß. Nach der beispielsweisen Veränderung der Temperatur im Ableitungsrohr 6 wird weiterhin beispielsweise der Druck innerhalb der möglichen Grenzen variiert und der Ausgangswert des Manometers über den Funktionsgeber 16 in das Potentiometer 11 dem Additionspunkt 14 zugeführt.

Weiterhin war beispielsweise angenommen, daß im Zuleitungsrohr 4 Druck und Temperatur in einem bestimmten funktionellen Zusammenhang stehen. Als weiterer Parameter tauchte dort die infolge eines weiteren Bunkers variierende Vorspannung des Zuleitungsrohres 4 auf. Alle diese Werte werden durch den Dehnungsmeßstreifen 9 als Spannungswerte des Zuleitungsrohres 4 erfaßt und wiederum über das Potentiometer 12 und den Additionspunkt 15 zum Ausgangssignal der Wägezelle 2 addiert.

Zu beachten ist, daß bei dem Verfahren alle Einflüsse jeweils eines unabhängigen Parameters oder mehrerer korrelierter Parameter summarisch durch die hier definierte Durchgriffskonstante automatisch zusammengefaßt werden. Bei der gemeinsamen Ermittlung des Einflusses der miteinander korrelierten Parameter Temperatur und Druck durch den Dehnungsmeßstreifen 9 werden also alle Einflüsse der Empfindlichkeit des Dehnungsmeßstreifens 9, seines Temperaturänderungskoeffizienten, der Federsteifigkeit im Rohrsystem, des wirksamen Druckquerschnittes usw. berücksichtigt, ohne daß der Entstehung oder den unterschiedlichen Auswirkungen dieser Veränderungen im einzelnen nachgegangen werden muß.

Es hat sich gezeigt, daß in der Praxis in sehr wirtschaftlicher Weise und technisch außerordentlich robust eine Minimierung der Einflüsse von veränderlichen Kraftnebenschlüssen erfolgt. Welche Parameter die Kraftnebenschlüsse beeinflussen können, ist entweder von der Aufgabe her schon ohne weiteres ersichtlich oder kann mit einigen wenigen nicht erfinderischen Versuchen festgestellt werden.

Falls die Abstützung des Wägebehälters 1 sehr weich ist, falls also zwischen Leergewicht und maximaler Belastung Geometrieänderungen der Abstützung zu einer Verfälschung der Meßwerte führen können, empfiehlt es sich, das beschriebene Justierverfahren für verschiedene Belastungen bzw. Füllungsgrade des Wägebehälters 1 durchzuführen. Falls bei verschiedenen Belastungen verschiedene Durchgriffskonstanten bestimmt werden, kann der Einfluß der Belastung durch weitere Funktionsgeber, beispielsweise in Gestalt eines Mikrocomputers bei digitaler Verarbeitung der Meßwerte, berücksichtigt werden.

**Patentansprüche**

1. Verfahren zum Justieren einer Kraftnebenschlüsse aufweisenden Wägevorrichtung, mit mindestens einer Wägezelle, dadurch gekennzeichnet, daß den jeweiligen Kraftnebenschlüssen mindestens eine Meßeinrichtung für einen, die Größe des Kraftnebenschlusses bestimmenden Parameter zugeordnet ist, daß dieser Parameter bei konstant gehaltener Belastung der Wägevorrichtung variiert wird und daß aus den in Abhängigkeit von der Größe des Parameters erfolgenden scheinbaren Belastungsänderungen der Wägevorrichtung eine Korrekturgröße für das Ausgangssignal der Wägezelle gewonnen wird.

2. Verfahren nach Anspruch 1, dadurch gekennzeichnet, daß die Korrekturgröße proportional zum Ausgangssignal der Meßeinrichtung ist.

3. Verfahren nach Anspruch 1 oder 2, dadurch gekennzeichnet, daß für mehrere, unterschiedliche, konstante Belastungen eine lastabhängige Korrekturgröße gewonnen wird.

4. Vorrichtung zur Durchführung des Verfahrens nach Anspruch 1 mit einer Kraftnebenschlüsse aufweisenden Wägevorrichtung, die über mindestens eine Wägezelle (2) abgestützt ist, deren Signalausgang mit einer Auswertevorrichtung (3) verbunden ist, dadurch gekennzeichnet, daß Aufnehmer (7, 8, 9) den Kraftnebenschlüssen (4, 5, 6) zugeordnet sind, die die Kraftnebenschlüsse (4, 5, 6) bestimmende Parameter messen, und daß die Ausgänge der Aufnehmer über Abschwächer (10, 11, 12) und Additionspunkte (13, 14, 15) mit den Signalausgängen der Wägezelle (2) verbunden sind.

5. Vorrichtung nach Anspruch 4, dadurch gekennzeichnet, daß die Abschwächer Potentiometer (10, 11, 12) sind.

6. Vorrichtung nach Anspruch 4. dadurch gekennzeichnet, daß die Abschwächer Operationsverstärker sind.

7. Vorrichtung nach mindestens einem der Ansprüche 4 bis 6, dadurch gekennzeichnet, daß zwischen Aufnehmer (8) und Additionspunkt (13) Funktionsgeber (16) geschaltet sind.

8. Vorrichtung zur Durchführung des Verfahrens nach Anspruch 1 mit einer Kraftnebenschlüsse aufweisenden Wägevorrichtung, die über mindestens eine Wägezelle (2) abgestützt ist, deren Signalausgang mit einer Auswertevorrichtung (3) verbunden ist, dadurch gekennzeichnet, daß Aufnehmer (7, 8, 9) den Kraftnebenschlüssen (4, 5, 6) zugeordnet sind, die die Kraftnebenschlüsse (4, 5, 6) bestimmende Parameter messen und daß zur Ausführung von Korrekturen ein Microprozessor vorgesehen ist, der mit den Aufnehmern (7, 8, 9) und den Signalausgängen der Wägezelle (2) verbunden ist.

**Claims**

1. Method for adjusting a weighing device having force shunts, with at least one weighing cell, characterised in that associated with the respective force shunts there is at least one measuring apparatus for a parameter which determines the extent of the force shunt, that this parameter is varied with a constantly maintained load of the weighing device and that a correction value is obtained for the output signal of the weighing cell from the apparent load variations of the weighing device which occur as a function of the magnitude of the parameter.

2. Method according to Claim 1, characterised in that the correction value is proportional to the output signal of the measuring apparatus.

3. Method according to Claim 1 or 2, characterised in that a load-dependent correction value is obtained for several, differing, constant loads.

4. Device to carry out the method according to Claim 1 with a weighing device having force shunts, which is supported via at least one weighing cell (2), the signal output of which is connected with an evaluation device (3), characterised in that receivers (7, 8, 9) are associated with the force shunts (4, 5, 6) to measure the parameters determining the force shunts (4, 5, 6) and that the outputs of the receivers are connected via attenuators (10, 11, 12) and addition points (13, 14, 15) with the signal outputs of the weighing cell (2).

5. Device according to Claim 4, characterised in that the attenuators are potentiometers (10, 11, 12).

6. Device according to Claim 4, characterised in that the attentuators are operational amplifiers.

7. Device according to at least one of Claims 4 to 6, characterised in that function generators (16) are connected between the receiver (8) and addition point (13).

8. Device to carry out the method according to Claim 1 with a weighing device having force shunts, which is supported via at least one weighing cell (2), the signal output of which is connected with an evaluation device (3), characterised in that receivers (7, 8, 9) are associated with the force shunts (4, 5, 6) to measure the parameters determining the force shunts (4, 5, 6) and that to carry out corrections a microprocessor is provided, which is connected with the receivers (7, 8, 9) and the signal outputs of the weighing cell (2).

## Revendications

1. Procédé d'ajustage d'un dispositif de pesée présentant des dérivations de forces, comportant au moins une cellule de pesée, caractérisé en ce qu'on rattache à chaque dérivation de forces au moins un dispositif de mesure pour un paramètre déterminant la grandeur de la dérivation de forces, on fait varier ce paramètre en maintenant la charge du dispositif de pesée constante et l'on tire une grandeur de correction du signal de sortie de la cellule de pesée des variations de charge apparentes du dispositif de pesée se produisant en fonction de la valeur du paramètre.

2. Procédé selon la revendication 1, caractérisé en ce que la grandeur de correction est proportionnelle au signal de sortie du dispositif de mesure.

3. Procédé selon la revendication 1 ou 2, caractérisé en ce qu'on obtient une grandeur de correction dépendant de la charge pour plusieurs charges constantes différentes.

4. Dispositif pour mettre en oeuvre le procédé selon la revendication 1, comportant un dispositif de pesée présentant des dérivations de forces, qui prend appui par l'intermédiaire d'au moins une cellule de pesée (2) dont la sortie des signaux est reliée à un dispositif de traitement (3), caractérisé en ce que des capteurs (7, 8, 9) sont rattachés aux dérivations de forces (4, 5, 6), lesdits capteurs mesurant les paramètres déterminant les dérivations de forces (4, 5, 6), et en ce que les sorties des capteurs sont reliées aux sorties des signaux de la cellule de pesée (2) par l'intermédiaire d'atténuateurs (10, 11, 12) et de noeuds d'addition (13, 14, 15).

5. Dispositif selon la revendication 4, caractérisé en ce que les atténuateurs sont des potentiomètres (10, 11, 12).

6. Dispositif selon la revendication 4, caractérisé en ce que les atténuateurs sont des amplificateurs opérationnels.

7. Dispositif selon l'une au moins des revendications 4 à 6, caractérisé en ce que des capteurs de fonctions (ou capteurs décomposeurs, ou résolveurs) (16) sont montés entre le capteur (8) et le noeud d'addition (13).

8. Dispositif pour mettre en oeuvre le procédé selon la revendication 1, comportant un dispositif de pesée présentant des dérivations de forces, prenant appui par l'intermédiaire d'au moins une cellule de pesée (2), dont la sortie des signaux est reliée à un dispositif de traitement (3), caractérisé en ce que des capteurs (7, 8, 9) sont rattachés aux dérivations de forces (4, 5, 6), lesdits capteurs qui mesurent des paramètres déterminant les dérivations de forces (4, 5, 6), et en ce que, pour effectuer des corrections, il est prévu un microcalculateur relié aux capteurs (7, 8, 9) et aux sorties des signaux de la cellule de pesée (2).